(19) Europäisches Patentamt
European Patent Office
Office européen des brevets

(11) **EP 1 030 168 B1**

(12) **EUROPÄISCHE PATENTSCHRIFT**

(45) Veröffentlichungstag und Bekanntmachung des Hinweises auf die Patenterteilung:
**22.10.2008 Patentblatt 2008/43**

(51) Int Cl.:
**G01F 1/60** (2006.01)

(21) Anmeldenummer: **00101840.7**

(22) Anmeldetag: **29.01.2000**

(54) **Signalverarbeitungsschaltung für eine Differenzspannung, insbesondere für ein magnetisch-induktives Durchflussmessgerät**

Signal processing circuit for a differential voltage, in particular for a magnetic inductive flowmeter

Dispositif de traitement d'un signal pour une tension différentielle, en particulier pour un débitmètre électromagnétique

(84) Benannte Vertragsstaaten:
**AT BE CH CY DE DK ES FI FR GB GR IE IT LI LU MC NL PT SE**

(30) Priorität: **15.02.1999 DE 19906004**

(43) Veröffentlichungstag der Anmeldung:
**23.08.2000 Patentblatt 2000/34**

(73) Patentinhaber: **KROHNE MESSTECHNIK GMBH & CO. KG**
**47058 Duisburg (DE)**

(72) Erfinder: **Brockhaus, Helmut, Dr.-Ing.**
**46535 Dinslaken (DE)**

(74) Vertreter: **Gesthuysen, von Rohr & Eggert**
**Patentanwälte**
**Postfach 10 13 54**
**45013 Essen (DE)**

(56) Entgegenhaltungen:
| | |
|---|---|
| WO-A-97/46852 | DE-A- 19 713 751 |
| DE-C- 19 716 151 | GB-A- 1 105 572 |
| GB-A- 2 324 606 | US-A- 5 426 984 |

**Beschreibung**

Die Erfindung betrifft eine Signalverarbeitungsschaltung für eine Differenzspannung als zu verarbeitendes Signal, insbesondere für ein magnetisch-induktives Durchflußmeßgerät, mit mindestens einem Vorverstärker und vorzugsweise mit einem dem Vorverstärker nachgeschalteten A/D-Wandler.

Die Erfindung ist nicht beschränkt auf die Signalverarbeitung in Verbindung mit magnetisch-induktiven Durchflußmeßgeräten, gleichwohl soll nachfolgend die Lehre der Erfindung nach ihrem Ausgangspunkt, nach der zu lösenden Aufgabe und in bezug auf die Lösung der Aufgabe immer in Verbindung mit einem magnetisch-induktiven Durchflußmeßgerät erläutert werden.

Das grundlegende Prinzip des magnetisch-induktiven Durchflußmeßgerätes für, strömende Medien geht bereits auf Faraday zurück, der im Jahre 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, welches Ladungsträger mit sich führt und durch ein Magnetfeld fließt, eine elektrische Feldstärke senkrecht zur Strömungsrichtung und zum Magnetfeld. Dieses Gesetz wird bei einem magnetisch-induktiven Durchflußmesser dadurch genutzt, daß ein Magnet, regelmäßig bestehend aus zwei Magnetspulen, ein Magnetfeld senkrecht zur Strömungsrichtung in einem Meßrohr erzeugt. Innerhalb dieses Magnetfeldes liefert jedes sich durch das Magnetfeld bewegende Volumenelement des strömenden Mediums mit der in diesem Volumenelement entstehenden Feldstärke einen Beitrag zu einer über Meßelektroden abgreifbaren Meßspannung. Die Meßelektroden werden bei den bekannten magnetisch induktiven Durchflußmeßgeräten so ausgeführt, daß sie entweder galvanisch oder kapazitiv mit dem strömenden Medium gekoppelt sind.

Bei magnetisch-induktiven Durchflußmeßgeräten wird zwischen den beiden Meßelektroden eine Differenzspannung gemessen, die proportional zur Durchflußgeschwindigkeit des strömenden Mediums ist. Leider treten dabei sowohl hohe Gleichtaktstörungen als auch differentielle Störungen der Differenzspannung auf, unter anderem herrührend aus elektrochemischen Effekten an den Meßelektroden. Um dieses Problem überhaupt lösen zu können, wird das Magnetfeld magnetisch-induktiver Durchflußmeßgeräte periodisch mit einer bestimmten Feldfrequenz umgeschaltet und die Differenzspannung zwischen den Meßelektroden frequenz- und phasenselektiv zu dieser Feldfrequenz ausgewertet.

Eine Signalverarbeitungsschaltung für die Differenzspannung eines magnetisch-induktiven Durchflußmeßgerätes als zu verarbeitendes Signal muß vor allem zwei Eigenschaften haben, um das Verhältnis zwischen dem auszuwertenden Signal und Störungen zu erhöhen bzw. um die Signalauswertung zu vereinfachen. Einerseits muß eine hohe Unterdrückung des Gleichtaktsignals gegeben sein, da nur das Differenzsignal signifikant ist. Andererseits muß auch eine hohe Unterdrückung der niederfrequenten Anteile im Differenzsignal, die unterhalb der Meßfrequenz liegen, gegeben sein, da diese niederfrequenten Anteile als Störungen relativ groß sind.

Im Stand der Technik, von dem die Erfindung ausgeht, weisen die in Rede stehenden Signalverarbeitungsschaltungen als Vorverstärker Differenzverstärker auf (vergleiche die deutschen Patentschriften 197 16 119 und 197 16 151). Dabei ist nachteilig, daß die Gleichtaktunterdrückung abhängig ist von absoluten beziehungsweise von relativen Widerstandswerten. Eine hohe Gleichtaktunterdrückung zu erreichen ist deshalb relativ teuer, weil hochpräzise Widerstände erforderlich sind. Im übrigen kann eine hohe Gleichtaktunterdrückung über einen größeren Temperaturbereich nur schwierig realisiert werden.

Der Erfindung liegt folglich die Aufgabe zugrunde, eine Signalverarbeitungsschaltung für eine Differenzspannung als zu verarbeitendes Signal, insbesondere für ein magnetisch-induktives Durchflußmeßgerät, zur Verfügung zu stellen, bei der in relativ einfacher und auch kostengünstiger Weise einerseits eine hohe Unterdrückung des Gleichtaktsignals, andererseits eine hohe Unterdrückung der niederfrequenten Anteile im Differenzsignal, die unterhalb der Meßfrequenz liegen, gegeben ist.

Die erfindungsgemäße Signalverarbeitungsschaltung, bei der die zuvor hergeleitete und aufgezeigte Aufgabe gelöst ist, ist nun zunächst und im wesentlichen dadurch gekennzeichnet, daß der Vorverstärker ein differentiell arbeitender Vorverstärker ist. Vorzugsweise ist der Vorverstärker mit einem differentiellen Eingang und einem differentiellen Ausgang versehen.

Für die erfindungsgemäße Signalverarbeitungsschaltung ist wichtig, wie bereits ausgeführt ist, daß sowohl eine hohe Unterdrückung des Gleichtaktsignals als auch eine hohe Unterdrückung der niederfrequenten Anteile im Differenzsignal, die unterhalb der Meßfrequenz liegen, gegeben ist. Folglich muß bei der erfindungsgemäßen Signalverarbeitungsschaltung der Vorverstärker insgesamt einen Hochpaß darstellen. Da nun erfindungsgemäß der Vorverstärker ein differentiell arbeitender Vorverstärker ist, muß der Vorverstärker zwei Hochpässe aufweisen, nämlich einen für den nicht-invertierenden Signalpfad und einen für den invertierenden Signalpfad.

Zur Realisierung der erfindungsgemäßen Signalverarbeitungsschaltung mit einem Vorverstärker, der differentiell arbeitet, gehört vorzugsweise, daß der Vorverstärker eingangsseitig zwei Einkoppelkondensatoren aufweist. Von besonderem Vorteil ist es, wenn die Eingangsimpedanz des Vorverstärkers für Gleichtaktsignale größer ist als für Differenzsignale. Dadurch ergibt sich für die Hochpässe, die sich aus den Eingangsimpedanzen des Vorverstärkers und aus den Einkoppelkondensatoren bilden, eine Grenzfrequenz, die für Gleichtaktsignale größer ist als für Differenzsignale.

Unvermeidliche Toleranzen der beiden Einkoppelkondensatoren führen zu einer Unsymmetrie zwischen den beiden Signalpfaden. Durch diese Unsymmetrie wird durch ein Gleichtaktsignal ein Differenzsignal erzeugt. Da, wie eingangs ausgeführt, mit hohen Gleichtaktstörungen zu rechnen ist, muß der zuvor angesprochene Effekt, daß nämlich eine Unsymmetrie zwischen den beiden Signalpfaden dazu führt, daß durch ein Gleichtaktsignal ein Differenzsignal erzeugt wird, so gut wie möglich unterdrückt werden. Die einfachste Lösung wäre es, die Zeitkonstante so groß wie möglich zu machen, damit die untere Grenzfrequenz so weit wie möglich von der Meßfrequenz, also von der Feldfrequenz entfernt ist. Das hätte jedoch den Nachteil, daß Gleichtaktsignale und niederfrequente Anteile im Differenzsignal, die unterhalb der Meßfrequenz liegen, nicht so gut unterdrückt würden, wie das gewünscht ist.

Das zuvor erläuterte Problem ist bei einer bevorzugten Ausführungsform der erfindungsgemäßen Signalverarbeitungsschaltung dadurch einer Lösung näher gebracht, daß der Vorverstärker zwei Operationsverstärker und zwischen den Eingängen der Operationsverstärker und den Einkoppelkondensatoren ein Widerstandsnetzwerk aufweist und daß zu dem Widerstandsnetzwerk zwei gebootstrapte Hauptwiderstände gehören. Der Eingangswiderstand, der hinter den Einkoppelkondensatoren gesehen wird und der auch für die Bestimmung der Zeitkonstanten maßgeblich ist, ist jeweils der gebootstrapte Hauptwiderstand, wobei der Bootstrap bewirkt, daß der effektive Eingangswiderstand größer ist als der eigentliche Wert des jeweiligen Hauptwiderstandes. Die Größe des Bootstraps ist für Gleichtaktsignale einerseits und für Differenzsignale andererseits unterschiedlich.

Eingangs ist darauf hingewiesen worden, daß zu der in Rede stehenden Signalverarbeitungsschaltung ein dem Vorverstärker nachgeschalteter A/D-Wandler gehören kann (A/D-Wandler = Analog/Digital-Wandler). Vorzugsweise handelt es sich dabei um einen A/D-Wandler mit differentiellen Eingängen. Das ist deshalb vorteilhaft, weil heute viele hochauflösende A/D-Wandler, die als integrierte Bausteine erhältlich sind, differentielle Eingänge aufweisen, vergleiche zum Beispiel den A/D-Wandler AD 7715 der Firma Analog Devices, Inc., USA. Der dem Vorverstärker nachgeschaltete A/D-Wandler mit differentiellen Eingängen verbessert die Gleichtaktunterdrückung.

Schließlich ist eine bevorzugte Ausführungsform der erfindungsgemäßen Signalverarbeitungsschaltung weiter dadurch gekennzeichnet, daß dem Vorverstärker ein differentiell arbeitender Eingangsverstärker vorgeschaltet ist. Mit diesem Eingangsverstärker kann zum Beispiel eine Verstärkung, eine Filterung und eine Impedanzanpassung zwischen den Meßelektroden eines magnetisch-induktiven Durchflußmeßgerätes und dem Vorverstärker verwirklicht werden. Im übrigen verhindert der dem Vorverstärker vorgeschaltete differentiell arbeitende Eingangsverstärker, daß die Einkoppelkondensatoren direkt mit den nicht dargestellten, zu einem magnetisch-induktiven Durchflußmeßgerät gehörenden Meßelektroden verbunden sind. Eine direkte Verbindung der Einkoppelkondensatoren mit den zu einem magnetisch-induktiven Durchflußmeßgerät gehörenden Meßelektroden hat sich nämlich als ungünstig herausgestellt.

Im einzelnen gibt es nun verschiedene Möglichkeiten, die erfindungsgemäße Signalverarbeitungsschaltung auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung. In der Zeichnung zeigt

Fig. 1 ein erstes Ausführungsbeispiel einer erfindungsgemäßen Signalverarbeitungsschaltung,

Fig. 2 ein zweites Ausführungsbeispiel einer erfindungsgemäßen Signalverarbeitungsschaltung und

Fig. 3 ein drittes Ausführungsbeispiel einer erfindungsgemäßen Signalverarbeitungsschaltung.

Die in den Figuren in Form bevorzugter Ausführungsbeispiele dargestellte Signalverarbeitungsschaltung ist bestimmt für eine Differenzspannung als zu verarbeitendes Signal, insbesondere für ein magnetisch-induktives Durchflußmeßgerät.

Zu der in den Figuren dargestellten Signalverarbeitungsschaltung gehört zunächst ein Vorverstärker 1. In den dargestellten Ausführungsbeispielen ist auch ein dem Vorverstärker 1 nachgeschalteter A/D-Wandler 2 angedeutet.

Für die erfindungsgemäße Signalverarbeitungsschaltung gilt nun zunächst, daß der Vorverstärker 1 ein differentiell arbeitender Vorverstärker ist. Der Vorverstärker 1 weist einen differentiellen Eingang und einen differentiellen Ausgang auf.

Bei den in den Figuren dargestellten Ausführungsbeispielen erfindungsgemäßer Signalverarbeitungsschaltungen stellt der Vorverstärker 1 insgesamt einen Hochpaß dar; damit wird das vom Grundsatz erreicht, was für die erfindungsgemäße Signalverarbeitungsschaltung wichtig ist, daß nämlich sowohl eine hohe Unterdrückung des Gleichtaktsignals als auch eine hohe Unterdrückung der niederfrequenten Anteile im Differenzsignal, die unterhalb der Meßfrequenz liegen, gegeben ist. Da nun erfindungsgemäß der Vorverstärker 1 ein differentiell arbeitender Vorverstärker ist, weist der Vorverstärker 1 zwei Hochpässe 3, 4 auf, nämlich einen für den nicht-invertierenden Signalpfad und einen für den invertierenden Signalpfad.

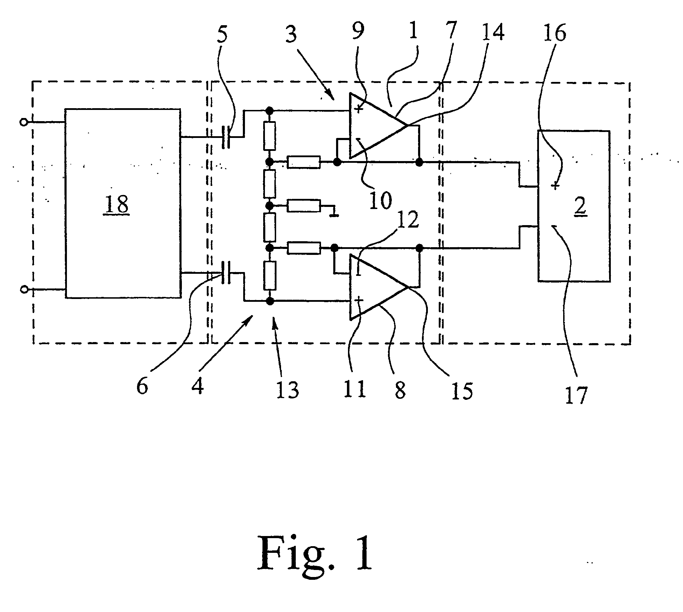

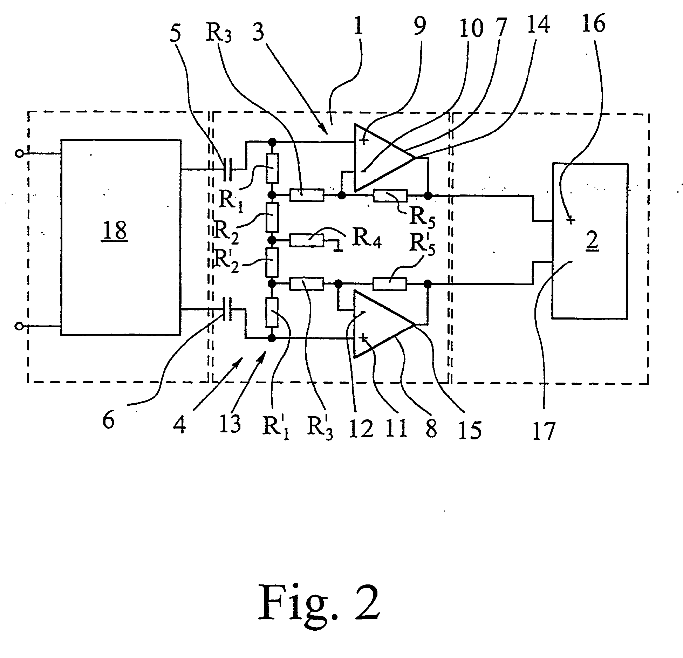

Wie dies die Fig. 1 und 2 zeigen, weist in den dargestellten Ausführungsbeispielen der Vorverstärker 1 der erfindungsgemäßen Signalverarbeitungsschaltung zwei Einkoppelkondensatoren 5, 6 auf. Die Eingangsimpedanz des Vorverstärkers 1 ist für Gleichtaktsignale größer als für Differenzsignale.

Nicht zu vermeidende Toleranzen der beiden Einkoppelkondensatoren 5, 6 führen zu einer Unsymmetrie zwischen den beiden Signalpfaden, also dem nicht-invertierenden Signalpfad einerseits und dem invertierenden Signalpfad andererseits. Durch diese Unsymmetrie wird durch ein Gleichtaktsignal ein - natürlich nicht erwünschtes - Differenzsignal erzeugt. Da, wie eingangs ausgeführt, jedenfalls dann, wenn die erfindungsgemäße Signalverarbeitungsschaltung in Verbindung mit einem magnetisch-induktiven Durchflußmeßgerät eingesetzt wird, mit hohen Gleichtaktstörungen zu rechnen ist, muß der zuvor angesprochene Effekt - Unsymmetrie zwischen den beiden Signalpfaden führt dazu, daß durch ein Gleichtaktsignal ein Differenzsignal erzeugt wird - so gut wie möglich unterdrückt werden.

Das zuvor angesprochene Problem ist bei den in den Fig. 1 und 2 dargestellten Ausführungsbeispielen erfindungsgemäßer Signalverarbeitungsschaltungen dadurch einer Lösung näher gebracht, und zwar im Sinne eines Kompromisses, daß der Vorverstärker 1 zwei Operationsverstärker 7, 8 und zwischen den Eingängen 9, 10 des Operationsverstärkers 7 und den Eingängen 11, 12 des Operationsverstärkers 8 sowie den Einkoppelkondensatoren 5, 6 ein Widerstandsnetzwerk 13 aufweist und daß zu dem Widerstandsnetzwerk 13 zwei gebootstrapte Hauptwiderstände $R_1$, $R'_1$ gehören. Der Eingangswiderstand, der hinter den Einkoppelkondensatoren 5, 6 gesehen wird und der auch für die Bestimmung der Zeitkonstanten maßgeblich ist, ist jeweils der gebootstrapte Hauptwiderstand $R_1$ bzw. $R'_1$, wobei der Bootstrap dazu führt, daß der effektive Eingangswiderstand größer ist als der eigentliche Wert des jeweiligen Hauptwiderstandes $R_1$ bzw. $R'_1$.

In den in den Fig. 1 und 2 dargestellten Ausführungsbeispielen gehören zu dem Widerstandsnetzwerk 13 - neben den Hauptwiderständen $R_1$ und $R'_1$ - den Bootstrap realisierende Widerstände, nachfolgend als Hilfswiderstände $R_2$, $R'_2$, $R_3$, $R'_3$ und $R_4$ bezeichnet.

Die Hauptwiderstände $R_1$ und $R'_1$ sowie die Hilfswiderstände $R_2$, $R'_2$, $R_3$, $R'_3$ und $R_4$ sind im einzelnen so angeordnet, geschaltet und verbunden, wie dies die Fig. 1 und 2 zeigen. Für die Anordnung, Schaltung und Verbindung der Hauptwiderstände $R_1$ und $R'_1$ sowie der Hilfswiderstände $R_2$, $R'_2$, $R_3$, $R'_3$ und $R_4$ wird ausdrücklich auf die Fig. 1 und 2 verwiesen, die für den Fachmann ohne weiteres verständlich sind, so daß es insoweit einer verbalen Beschreibung nicht bedarf.

Für die Ausführungsbeispiele erfindungsgemäßer Signalverarbeitungsschaltungen, die in den Fig. 1 und 2 dargestellt sind, gilt nun einerseits, daß die Größe des Bootstraps für Differenzsignale und für Gleichtaktsignale unterschiedlich ist, daß andererseits der Hilfswiderstand $R_4$ für Differenzsignale ohne Wirkung ist, für Gleichtaktsignale jedoch Wirkung hat.

Für den Eingangswiderstand, wie er hinter den Einkoppelkondensatoren 5, 6 gesehen wird, gilt

für Differenzsignale:

$$R_{in,dm} = R_1 \cdot \frac{R_2}{R_3} = R_1 \cdot b_{dm}$$

für Gleichtaktsignale:

$$R_{in,cm} = R_1 \cdot \frac{R_2 + (R_4 \cdot 2)}{R_3} \approx R_1 \cdot b_{cm}.$$

Für Differenzsignale wird also der wirksame Eingangswiderstand um den Faktor $b_{dm}$ gegenüber dem Hauptwiderstand $R_1$ (beziehungsweise dem Hauptwiderstand $R'_1$) erhöht, während die Erhöhung für Gleichtaktsignale um den Faktor $b_{cm}$ erfolgt. Wird nun der Hilfswiderstand $R_2$ zehnfach so groß wie der Hilfswiderstand $R_3$ gewählt, dann beträgt der für Differenzsignale wirksame Faktor $b_{dm}$ 10. Wird nun außerdem der Hilfswiderstand $R_4$ fünfzig Mal so groß wie der Hilfswiderstand $R_2$ gewählt, dann beträgt der für Gleichtaktsignale wirksame Faktor $b_{cm}$ 1000.

Für die Zeitkonstanten gilt

für die Differenzsignale:    $t_{dm} = C_1 R_1 b_{dm}$,

für die Gleichtaktsignale:    $t_{cm} = C_1 R_1 b_{cm}$,

wobei $C_1$ die Kapazität des Einkoppelkondensators 5 ist.

Die Zeitkonstante für Differenzsignale ist also relativ klein, um differentielle Störungen sehr gut unterdrücken zu können. Demgegenüber ist die Zeitkonstante für Gleichtaktsignale relativ groß, damit durch die schon erläuterten Unsymmetrien, insbesondere bei den Einkoppelkondensatoren 5 und 6, durch Gleichtaktsignale nicht Differenzsignale erzeugt werden. Im zuvor zahlenmäßig dargestellten Ausführungsbeispiel ist die Gleichtaktunterdrückung um den Faktor

$b_{cm}$ / $b_{dm}$ erhöht, im Ausführungsbeispiel um den Faktor 100.

Das in Fig. 2 dargestellte Ausführungsbeispiel einer erfindungsgemäßen Signalverarbeitungsschaltung unterscheidet sich von dem in Fig. 1 dargestellten Ausführungsbeispiel nur dadurch, daß zwischen den Ausgängen 14, 15 der Operationsverstärker 7, 8 und den invertierenden Eingängen 10, 12 noch jeweils ein Rückführungswiderstand $R_5$ bzw. $R'_5$ vorgesehen ist, durch die eine Verstärkung realisiert ist, die sich auf die Differenzsignale einerseits und die Gleichtaktsignale andererseits unterschiedlich auswirkt.

Wenn, wie oben beschrieben, $R_4 > R_2 > R_3$ ist und wenn weiterhin $R_4 > R_5 > R_3$ ist, gilt für die Verstärkung

des Differenzsignals:

$$V_{dm} = \frac{R_5}{R_2},$$

des Gleichtaktsignals:

$$V_{cm} = \frac{R_5}{2 \cdot R_4}.$$

Ist zum Beispiel $R_5$ 5 mal so groß wie $R_2$, dann beträgt die Verstärkung für das Differenzsignal 5, die Verstärkung für das Gleichtaktsignal jedoch nur 0,05. Die Gleichtaktverstärkung ist damit deutlich kleiner als die Differenzverstärkung, was sich positiv auf die Gleichtaktunterdrückung auswirkt.

Wie bereits ausgeführt, gilt für die in den Figuren dargestellten Ausführungsbeispiele erfindungsgemäßer Signalverarbeitungsschaltungen, daß dem Vorverstärker 1 ein A/D-Wandler 2 nachgeschaltet ist. Vorzugsweise weist dieser A/D-Wandler 2 differentielle Eingänge 16, 17 auf. Heute haben hochauflösende A/D-Wandler, die als integrierte Bausteine erhältlich sind, in der Regel differentielle Eingänge, vergleiche zum Beispiel den AD-Wandler 7715 der Firma Analog Devices, Inc., USA.

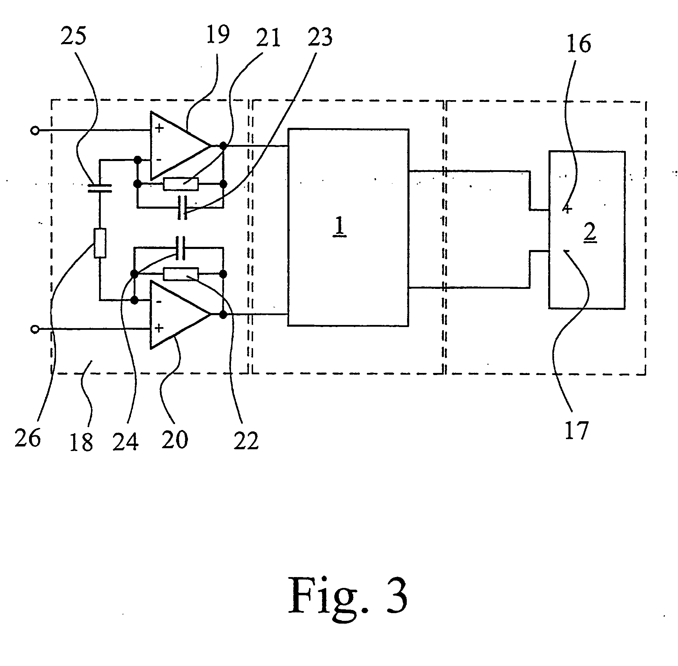

In den Ausführungsbeispielen erfindungsgemäßer Signalverarbeitungsschaltungen, die in den Fig. 1 und 2 dargestellt sind, ist ein dem Vorverstärker 1 vorgeschalteter differentiell arbeitender Eingangsverstärker 18 angedeutet. Im Ausführungsbeispiel nach Fig. 3 ist dieser Eingangsverstärker im einzelnen dargestellt. Mit dem dem Vorverstärker 1 vorgeschalteten differentiell arbeitenden Eingangsverstärker 18 kann zum Beispiel eine Verstärkung, eine Filterung und eine Impedanzanpassung zwischen nicht dargestellten Meßelektroden eines ebenfalls nicht dargestellten magnetisch-induktiven Durchflußmeßgerätes und dem Vorverstärker 1 verwirklicht werden.

Zu dem in Fig. 3 im einzelnen dargestellten Eingangsverstärker 18 gehören zwei Operationsverstärker 19, 20, zwei Rückführungswiderstände 21, 22, zwei Rückführungskondensatoren 23, 24 und - eingangsseitig vorgesehen - die Reihenschaltung aus einem Verbindungskondensator 25 und einem Verbindungswiderstand 26. Für die Anordnung, Schaltung und Verbindung der Operationsverstärker 19, 20, der Rückführungswiderstände 21, 22, der Rückführungskondensatoren 23, 24 sowie des Verbindungskondensators 25 und des Verbindungswiderstandes 26 wird ausdrücklich auf die Fig. 3 verwiesen, die für den Fachmann ohne weiteres verständlich ist, so daß es insoweit einer verbalen Beschreibung nicht bedarf.

Für den im einzelnen realisierten Eingangsverstärker 18 gilt, daß Differenzsignale mit einer Verstärkung größer als 1, Gleichtaktsignale jedoch mit einer Verstärkung von 1 weitergegeben werden, ohne daß Toleranzen der Bauelemente einen Einfluß auf die Verstärkung für Gleichtaktsignale haben. Durch den Eingangsverstärker 18 wird also ein weiteres mal die Gleichtaktunterdrückung erhöht. In Verbindung mit dem im einzelnen beschriebenen Vorverstärker 1 und mit dem A/D-Wandler 2 mit differentiellen Eingängen 16, 17 wirkt sich dies insgesamt besonders positiv aus.

Drückt man die Rückführungswiderstände 21, 22 durch $R_6$, die Rückführungskondensatoren 23, 24 durch $C_2$, den Verbindungskondensator 25 durch $C_3$ und den Verbindungswiderstand 26 durch $R_7$ aus, dann gilt für die Verstärkung der Differenzsignale

$$V_{dm} = 1 + \frac{2R_6}{R_7}$$

und für die Zeitkonstanten

$$t_{TP} = R_6 C_3 \text{ bzw. } t_{HP} = R_7 C_3.$$

**Patentansprüche**

1. Signalverarbeitungsschaltung für eine Differenzspannung als zu verarbeitendes Signal, insbesondere für ein magnetisch-induktives Durchflußmeßgerät, mit mindestens einem differentiell arbeitenden Vorverstärker (1), wobei der Vorverstärker (1) eingangsseitig zwei Einkoppelkondensatoren (5, 6) aufweist, **dadurch gekennzeichnet, daß** der Vorverstärker (1) zwei Operationsverstärker (7, 8) und zwischen den Eingängen (9, 10, 11, 12) der Operationsverstärker (7, 8) und den Einkoppelkondensatoren (5, 6) ein Widerstandsnetzwerk (13) aufweist und daß zu dem Widerstandsnetzwerk (13) zwei gebootstrapte Hauptwiderstände $R_1$, $R'_1$ und Hilfswiderstände $R_2$, $R'_2$, $R_3$ $R'_3$, $R_4$, gehören, die derart angeordnet und miteinander verschaltet sind, daß für den Eingangswiderstand, wie er hinter den Einkoppelkondensatoren (5, 6) gesehen wird, gilt

für Differenzsignale:

$$R_{in,dm} = R_1 \cdot \frac{R_2}{R_3}$$

für Gleichtaktsignale:

$$R_{in,cm} = R_1 \cdot \frac{R_2 + (R_4 \cdot 2)}{R_3}$$

2. Signalverarbeitungsschaltung nach Anspruch 1, **dadurch gekennzeichnet, daß** die Hilfswiderstände derart gewählt sind, daß gilt

$$R_4 > R_2 > R_3.$$

3. Signalverarbeitungsschaltung nach Anspruch 2, **dadurch gekennzeichnet, daß** zwischen den Ausgängen (14, 15) der Operationsverstärker (7, 8) und den invertierenden Eingängen (10, 12) der Operationsverstärker (7, 8) jeweils ein Rückführungswiderstand $R_5$ bzw. $R'_5$ vorgesehen ist, wobei die Hilfswiderstände derart gewählt sind, daß gilt

$$R_4 > R_5 > R_3.$$

4. Signalverarbeitungsschaltung nach einem der Ansprüche 1 bis 3, **dadurch gekennzeichnet, daß** der Vorverstärker (1) einen differentiellen Eingang und einen differentiellen Ausgang aufweist.

5. Signalverarbeitungsschaltung nach einem der Ansprüche 1 bis 4, mit einem dem Vorverstärker (1) nachgeschalteten A/D-Wandler (2), **dadurch gekennzeichnet, daß** der A/D-Wandler (2) differentielle Eingänge (16, 17) aufweist.

6. Signalverarbeitungsschaltung nach einem der Ansprüche 1 bis 5, **dadurch gekennzeichnet, daß** dem Vorverstärker (1) ein differentiell arbeitender Eingangsverstärker (18) vorgeschaltet ist.

**Claims**

1. Signal processing circuit for a differential voltage as the signal to be processed, particularly for a magneto-inductive flowmeter, having at least one differentially operating preamplifier (1), the preamplifier (1) having two input coupling capacitors (5, 6) at its inputs, **characterized in that** the preamplifier (1) has two operational amplifiers (7, 8) and, between the inputs (9, 10, 11, 12) of the operational amplifiers (7, 8) and the input coupling capacitors (5, 6), a resistor network (13), and **in that** the resistor network (13) includes two bootstrapped primary resistors $R_1$, $R'_1$ and secondary resistors $R_2$, $R'_2$, $R_3$, $R'_3$, $R_4$, which are arranged and interconnected such that the following applies for the input resistance, as seen from downstream of the input coupling capacitors (5, 6):

for differential signals:

$$R_{in,dm} = R_1 \cdot \frac{R_2}{R_3}$$

for common-mode signals:

$$R_{in,cm} = R_1 \cdot \frac{R_2 + (R_4 \cdot 2)}{R_3}$$

2.  Signal processing circuit according to Claim 1, **characterized in that** the secondary resistors are chosen such that the following applies:

$$R_4 > R_2 > R_3.$$

3.  Signal processing circuit according to Claim 2, **characterized in that** the outputs (14, 15) of the operational amplifiers (7, 8) and the inverting inputs (10, 12) of the operational amplifiers (7, 8) have a respective feedback resistor $R_5$ and $R'_5$ provided between them, the secondary resistors being chosen such that the following apples:

$$R_4 > R_5 > R_3.$$

4.  Signal processing circuit according to one of Claims 1 to 3, **characterized in that** the preamplifier (1) has a differential input and a differential output.

5.  Signal processing circuit according to one of Claims 1 to 4, having an A/D converter (2) connected downstream of the preamplifier (1), **characterized in that** the A/D converter (2) has differential inputs (16, 17).

6.  Signal processing circuit according to one of Claims 1 to 5, **characterized in that** the preamplifier (1) has a differential operating input amplifier (18) connected upstream of it.

**Revendications**

1.  Circuit de traitement de signal pour une tension différentielle faisant office de signal à traiter, notamment pour un débitmètre magnéto-inductif, comprenant au moins un préamplificateur (1) à fonctionnement différentiel, le préamplificateur (1) présentant en entrée deux condensateurs de couplage d'entrée (5, 6), **caractérisé en ce que** le préamplificateur (1) présente deux amplificateurs opérationnels (7, 8) et un réseau résistif (13) entre les entrées (9, 10, 11, 12) des amplificateurs opérationnels (7, 8) et les condensateurs de couplage d'entrée (5, 6) et que le réseau résistif (13) inclut deux résistances principales d'amorçage ($R_1$, $R'_1$) et des résistances auxiliaires ($R_2$, $R'_2$, $R_3$, $R'_3$, $R_4$) qui sont disposées et reliées entre elles de telle sorte que la résistance d'entrée telle qu'elle est vue après les condensateurs de couplage d'entrée (5, 6) est définie par les équations suivante :

pour les signaux différentiels :

$$R_{in,dm} = R_1 \cdot \frac{R_2}{R_3}$$

(suite)

pour les signaux synchrones :

$$R_{in,cm} = R_1 \quad \frac{R_2 + (R_4 \cdot 2)}{R_3}$$

**2.** Circuit de traitement de signal selon la revendication 1, **caractérisé en ce que** les résistances auxiliaires sont choisies de telle sorte que

$$R_4 > R_2 > R_3.$$

**3.** Circuit de traitement de signal selon la revendication 2, **caractérisé en ce qu'**une résistance de contre-réaction $R_5$ ou $R'_5$ est à chaque fois prévue entre les sorties (14, 15) des amplificateurs opérationnels (7, 8) et les entrées inverseuses (10, 12) des amplificateurs opérationnels (7, 8), les résistances auxiliaires étant choisies de telle sorte que

$$R_4 > R_5 > R_3.$$

**4.** Circuit de traitement de signal selon l'une des revendications 1 à 3, **caractérisé en ce que** le préamplificateur (1) présente une entrée différentielle et une sortie différentielle.

**5.** Circuit de traitement de signal selon l'une des revendications 1 à 4, comprenant un convertisseur A/N (2) branché à la suite du préamplificateur (1), **caractérisé en ce que** le convertisseur A/N (2) présente des entrées différentielles (16, 17).

**6.** Circuit de traitement de signal selon l'une des revendications 1 à 5, **caractérisé en ce qu'**un amplificateur d'entrée (18) à fonctionnement différentiel est branché avant le préamplificateur (1).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19716119

- DE 19716151